# EUROPÄISCHE PATENTSCHRIFT

(11) **EP 1 197 624 B1**
(45) Veröffentlichungstag und Bekanntmachung des Hinweises auf die Patenterteilung: **29.08.2007**
(21) Anmeldenummer: 00810947.2
(22) Anmeldetag: 13.10.2000
(51) Int. Cl.: E05D 15/06

(54) **Befestigungsvorrichtung für eine Schiene**
Fixing device for a rail
Dispositif de fixation pour un rail

(43) Veröffentlichungstag der Anmeldung: 17.04.2002
(73) Patentinhaber: HAWA AG, CH-8932 Mettmenstetten (CH)
(72) Erfinder: Haab, Karl, 6353 Weggis (CH); Haab, Otto, 8932 Mettmenstetten (CH)
(74) Vertreter: Rutz, Peter

(56) Entgegenhaltungen:
- DE-A- 3 602 567
- DE-A- 19 842 567
- DE-C- 19 507 715
- DE-U- 29 723 734
- DE-U- 29 922 481

## Beschreibung

Die Erfindung betrifft eine Befestigungsvorrichtung für eine Schiene, insbesondere eine Lauf- oder Führungsschiene für Schiebebeschläge, nach dem Oberbegriff des Patentanspruchs 1.

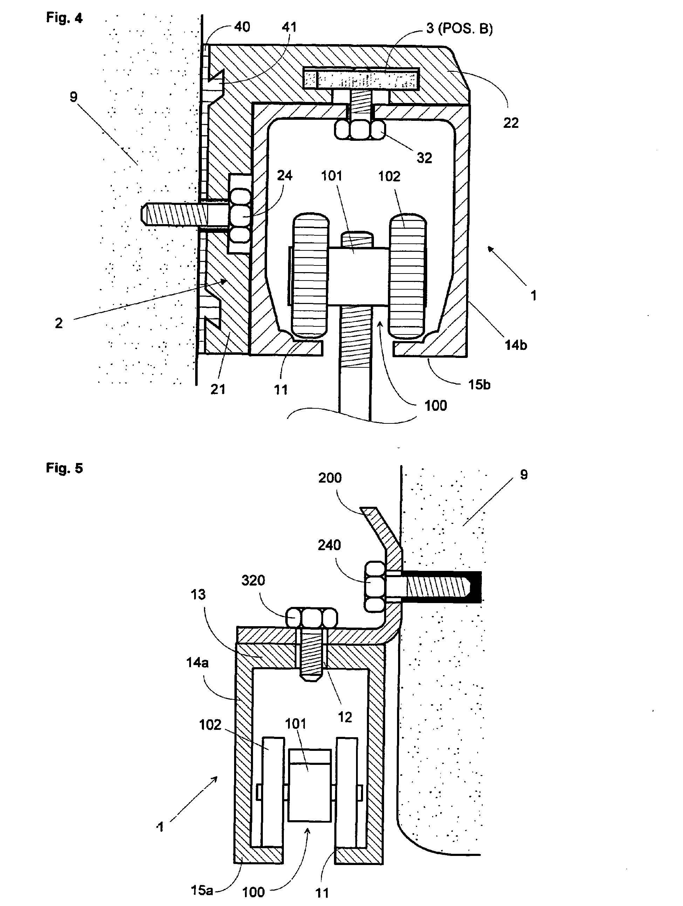

Schiebetüren, die zum Abschliessen und/oder Unterteilen von Räumen dienen, sind normalerweise an einem Laufwerk aufgehängt, das in einer Schiene geführt ist. Schienen dieser Art, die normalerweise an der Decke oder an einer Seitenwand befestigt werden, sowie dazu passende Laufwerksgarnituren sind beispielsweise im Katalog 2000 "Schiebebeschläge/Baubeschläge" Glas/Metall der HAWA AG, Mettmenstetten beschrieben (siehe z.B. Seite 14). Dort ist u.a. gezeigt, dass Schienen, die beispielsweise ein U-aufweisen, mit dem Mauerwerk mittels Schrauben verbunden sind, die durch Bohrungen in der Schiene geführt sind. Wie in der DE-A1 3201 121 gezeigt, können die Lauf- und Führungsschienen auch Flanschen aufweisen, die mit Bohrungen für die Befestigungsschrauben versehen sind. In der WO 00/55460 ist ferner eine mit Gewindebohrungen versehene Schiene gezeigt, die mittels Befestigungsschrauben und einem Winkelelement mit einer Mauer verbunden ist (siehe nachstehend Fig. 5).

Zur Montage müssen diese Schienen daher meist am Installationsort mit entsprechend hohem Aufwand mit den notwendigen Bohrungen, gegebenenfalls mit Gewindebohrungen versehen werden. Aufgrund der spanabhebenden Bearbeitung der Schiene bei der Durchführung der Bohrungen gelangen dabei oft Metallpartikel auf die Laufflächen der Schiene, wodurch Schäden an den Rädern der Laufwerke verursacht und die resultierenden Laufeigenschaften negativ beeinflusst werden können. Zudem können bei der mechanischen Bearbeitung sowie durch die direkte Montage der Schiene an das Mauerwerk weitere Schäden durch Kratzer oder Verbiegungen der Schiene entstehen.

Bei der Montage der Schienen insbesondere im Rahmen von Renovationsarbeiten können je nach Materialbeschaffenheit der Montagestellen weitere Probleme entstehen.

Wie z.B. aus der DE-A1 3201 121 ersichtlich, können verwendete Befestigungsmittel wie Flanschen, Schrauben, etc., die nach der Montage der Schiene sichtbar bleiben, zudem störend wirken.

Bei der in der DE 299 22 481 U1 beschriebenen Vorrichtung wird eine Laufschiene mittels mehrerer Halter an einem Futterbrett einer Zarge befestigt. Die einzelnen Halter müssen mit entsprechendem Aufwand präzise ausgerichtet werden und können wiederum störend in Erscheinung treten.

In der DE 36 02 567 ist ein Schiebetürantrieb beschrieben, bei dem eine Laufschiene, die nur eine untere Lauffläche für die Tragrollen eines Rollenwagens aufweist, seitlich formschlüssig mit einem Profil verbunden. Diese Art der Montage ist bei U-Profilförmigen Laufschienen kaum Möglich und erfordert eine gegenseitige Anpassung der Profile der entsprechenden Vorrichtungsteile.

Der vorliegenden Erfindung liegt daher die Aufgabe zugrunde, eine Befestigungsvorrichtung zu schaffen, mittels der eine Schiene, insbesondere eine Lauf- oder Führungsschiene für Schiebebeschläge, mit geringem Aufwand und ohne das Auftreten der oben beschriebenen Nachteile montiert werden kann.

Diese Aufgabe wird mit einer Befestigungsvorrichtung gelöst, welche die in Anspruch 1 angegebenen Merkmale aufweist. Vorteilhafte Ausgestaltungen der Erfindung sind in weiteren Ansprüchen angegeben.

Die Befestigungsvorrichtung, die zum Halten einer Schiene, insbesondere einer Lauf- oder Führungsschiene dient, weist eine mit einem Winkelprofil versehene Leiste auf, die mit geringem Aufwand einerseits mit einer Wand und andererseits mit einer Schiene verbindbar ist. Die Leiste weist zwei zur Aufnahme einer Schiene vorgesehene Schenkel auf, von denen der erste Schenkel mit Öffnungen zur Durchführung von mit der Wand verbindbaren Befestigungsschrauben und der zweite Schenkel mit einem T-Profilförmigen, gegen die Schiene offenen Längsschlitz versehen ist, der zur Aufnahme und zum Halten eines Arretierelementes dient, das vorzugsweise ein Gewinde für eine mit der Schiene verbindbare Montageschraube aufweist.

Durch die erfindungsgemässe Lösung ergeben sich verschiedene Vorteile bei Herstellung, Montage sowie beim späteren Betrieb der einzelnen Vorrichtungsteile. Die Schiene und die zu deren Aufnahme vorgesehene Leiste können bereits während der Fertigung mit Bohrungen für die Befestigungs- und die Montageschrauben versehen werden. Ein Bohren und/oder Gewindeschneiden während der Montage der Vorrichtung entfällt, so dass gleichzeitig eine Verschmutzung oder mechanische Beeinträchtigung der Schiene vermieden wird. Dadurch wird eine optimale Funktion der Schiene und darin geführter Laufwerke gewährleistet. Die Leiste kann mit mehreren Öffnungen für Befestigungsschrauben versehen sein, da diese nach Abschluss der Montage der Vorrichtung mitsamt den Befestigungsschrauben durch die montierte Schiene abgedeckt sind und somit nicht störend wirken. Da die Arretierelemente an beliebigen Positionen der Leiste in den Längsschlitz eingeführt werden können, kann die Schiene ebenfalls mit vorgefertigten Bohrungen versehen sein, die der Durchführung der Montageschrauben dienen.

Die Montage der Schiene in die vormontierte Leiste kann daher mit wenigen Handgriffen erfolgen. Das Arretierelement wird dazu in den Längsschlitz der Leiste eingeführt, von einer Position A in eine Position B gedreht und anschliessend in dieselbe Richtung drehend festgezogen. Ebenso einfach ist natürlich auch das Lösen und wieder Montieren der Schiene mit denselben Teilen möglich.

Die Abmessungen der Schiene und der Leiste werden vorzugsweise aufeinander abgestimmt, so dass sie nach Abschluss der Montage optisch eine Einheit bilden. Die Innenseite der Leiste wird abgedeckt, so dass keine Flanschen oder Laschen sichtbar sind. Durch diese Ausgestaltung von Schiene und Leiste können deren Enden vorteilhaft mit einem Abdeckelement versehen sein, welches dort gegebenenfalls vorhandene Längenunterschiede von Schiene und Leiste verdeckt.

Die Montage der Leiste kann an Wänden unterschiedlichen Materials problemlos erfolgen. Besondere Anforderungen an die Konstruktion und Ausgestaltung des mit einer Schiene zu versehenen Substrats sind nicht vorhanden, so dass die erfindungsgemässe Vorrichtung besonders vorteilhaft auch bei Renovationen und Sanierungen von Gebäuden einsetzbar ist.

In einer vorzugsweisen Ausgestaltung ist die Leiste zudem auf einfache Weise mit einem oder mehreren Distanzelementen verbindbar, durch die der Abstand der Schiene zur Wand einstellbar ist.

Die Schiene weist vorzugsweise zumindest annährend ein U-Profil auf. Sie kann jedoch auch andere Profilformen aufweisen. Möglich ist ferner die Verwendung von Doppelschienen. In diesem Fall weist der entsprechende Schenkel der Leiste vorzugsweise zwei parallel verlaufende Längschlitze auf.

Nachfolgend wird die Erfindung anhand einer Zeichnung näher erläutert. Dabei zeigt :
- Fig. 1: eine erfindungsgemässe Befestigungsvorrichtung mit einer Schiene 1 und einer Leiste 2 in einer bevorzugten Ausgestaltung,
- Fig. 2: die erfindungsgemässe Befestigungsvorrichtung mit im Schnitt gezeigter Schiene 1 bei der Montage,
- Fig. 3: die erfindungsgemässe Befestigungsvorrichtung mit im Schnitt gezeigter Schiene 1 und Leiste 2 bei der Montage,
- Fig. 4: die erfindungsgemässe Befestigungsvorrichtung mit im Schnitt gezeigter Schiene 1 und Leiste 2 nach der Montage und
- Fig. 5: eine aus dem Stand der Technik bekannte Befestigungsvorrichtung für eine Schiene 1.

Fig. 5 zeigt eine aus der Offenlegungsschrift WO 00/55460 bekannte Befestigungsvorrichtung mit einem Winkelstück 200, das mittels einer Befestigungsschraube 240 einerseits mit einer Wand 9 und mittels einer Montageschraube 320 andererseits mit einer Schiene 1 verschraubt ist. Die annähernd U-Profil-förmige Schiene 1 besteht aus einem Rückenelement 13, an dessen Enden parallel verlaufende Schenkel 14a, 14b mit abschliessenden, gegeneinander gerichteten Fussstücken 15a, 15b vorgesehen sind, deren Oberseiten die Laufflächen 11 für die Räder 102 eines Laufwerks 100 bilden, das zum Tragen eines verschiebbaren Elementes, beispielsweise einer Tür oder einer Trennwand dient.

Die eingangs beschriebenen Nachteile einer derartigen Vorrichtung sind aus Fig. 5 deutlich erkennbar. Die Schiene 1 ist an passenden Stellen mit Gewindebohrungen 12 für die Montageschrauben 320 zu versehen, die von oben in das Rückenelement 13 der Schiene 1 hinein geschraubt werden. Durch die Bearbeitung dieser Teile kann, wie oben beschrieben, eine Verschmutzung der Laufschiene 1 sowie eine entsprechende Beeinträchtigung der Betriebseigenschaften des Laufwerks 100 entstehen. Bei einem Lösen und Verschieben der Vorrichtung zur Justierung der Lage der Schiene 1 sind, wiederum mit entsprechendem Aufwand, gegebenenfalls neue Bohrungen vorzusehen. Die Montageelemente, Winkelstück 200 sowie Befestigungs- und Montageschrauben 240, 320 sind zudem nicht abgedeckt, wodurch der ästhetische Eindruck der montierten Vorrichtung wenig befriedigt.

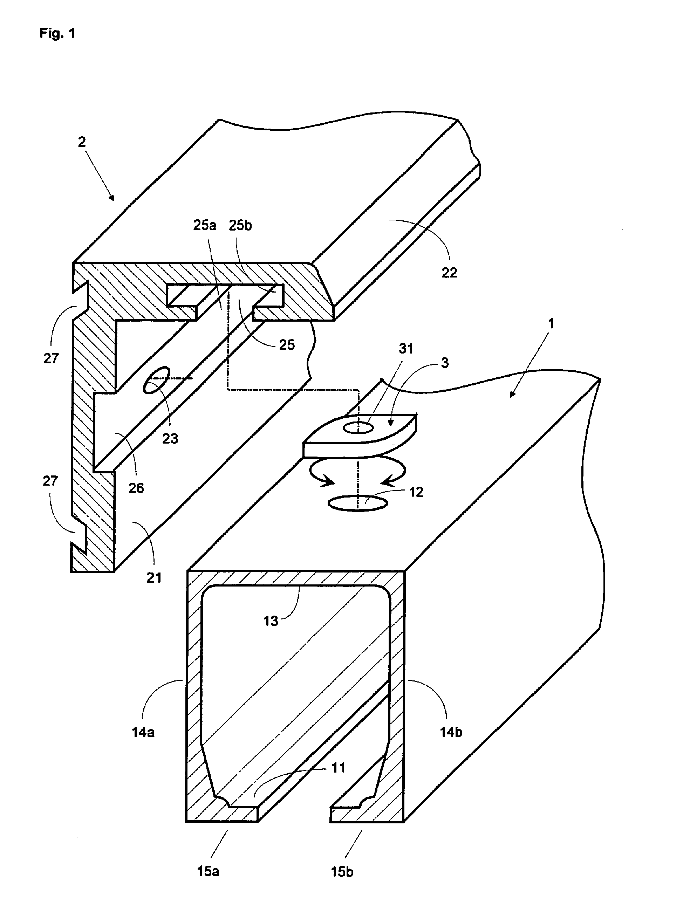

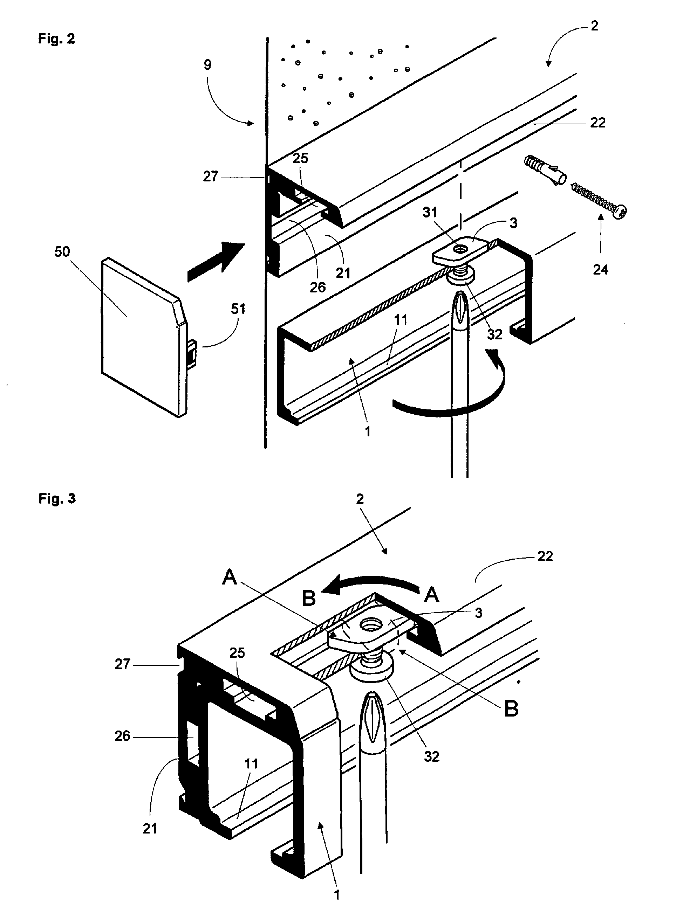

Fig. 1 zeigt eine erfindungsgemässe Befestigungsvorrichtung mit einer vorzugsweise aus Leichtmetall gefertigten Leiste 2, die ein durch zwei senkrecht aufeinander stehende Schenkel 21, 22 gebildetes Winkelprofil aufweist, in das hinein eine Schiene 1 montiert wird. Der erste, senkrecht stehende Schenkel 21 weist Öffnungen 23 zur Durchführung von mit einer Wand 9 (siehe Fig. 4) zu verbindenden Befestigungsschrauben 24 auf. Der zweite, horizontal stehende Schenkel 22 weist einen T-Profilförmigen, gegen die Schiene 1 offenen Längsschlitz 25 auf, der zur Aufnahme und zum Halten eines Arretierelementes 3 dient, das durch einen äusseren Teilschlitz 25a mit geringerer Abmessung in einen inneren Teilschlitz 25b mit grösserer Abmessung einführbar und dort von einer ersten Position A in zweite Position B drehbar ist (siehe Fig. 3).

Das Arretierelement 3 weist vorzugsweise ein Gewinde 31 für eine beispielsweise durch eine Bohrung 12 im Rückenelement 13 geführte und dadurch mit der Schiene 1 verbindbare Montageschraube 32 auf, die nach dem Positionieren des Arretierelement 3 fest gezogen werden kann. Möglich ist jedoch eine feste Verbindung zwischen der Montageschraube 32 und dem Arretierelement 3, welches derart ausgestaltet wird, dass es beim Drehen im Längsschlitz 25 verklemmt.

Die zur Durchführung der Befestigungsschrauben dienenden Öffnungen 23 sind vorzugsweise in einer zur Aufnahme des Kopfes der Befestigungsschraube 24 geeigneten Absenkung, vorzugsweise in einem längs dem ersten Schenkel 21 verlaufenden Kanal 26 angeordnet. Dadurch kann eine Standardschiene verwendet und zwischen die Schenkel 21, 22 der Leiste 2 eingefügt und befestigt werden.

Dadurch, dass der Kopf der Befestigungsschraube 24 im Kanal 26 eingebettet ist, liegt der Schenkel 14 der Schiene 1 zudem vollflächig auf dem Schenkel 21 der Leiste 2 auf, was die Aufnahme von seitlich einwirkenden Lasten ermöglicht.

Der Kanal 26 wird mittig vorzugsweise zusätzlich mit einer durchgängigen Bohrkerbe versehen, was das gegebenenfalls notwendige Bohren von zusätzlichen Löchern vereinfacht.

Aus Fig. 1 und Fig. 4 ist ferner ersichtlich, dass der erste Schenkel 21 auf der der Schiene 1 abgewandten Seite mit Längsnuten 27 versehen ist, die zur Aufnahme von Halterillen 41 eines Distanzelementes 40 dienen, welches eine einfache Einstellung des Abstandes von Schiene 1 zur Wand erlaubt.

Aus Fig. 2 und Fig. 3 ist die Montage der Schiene 1 gut ersichtlich. Fig. 2 zeigt die erfindungsgemässe Befestigungsvorrichtung mit im Schnitt dargestellter Schiene 1 bei der Montage. Fig. 3 zeigt die erfindungsgemässe Befestigungsvorrichtung mit im Schnitt gezeigter Schiene 1 und Leiste 2. Aus Fig. 3 ist ersichtlich, dass das mit der Montageschraube 32 verbundene Arretierelement 3 entlang der Schiene 1 ausgerichtet in den Längsschlitz 25 eingeführt und dort von einer Position A in eine Position B gedreht wird, bis es innerhalb des Längsschlitzes 25 arretiert und gegebenenfalls verklemmt. In der Anordnung gemäss Fig. 3 ist das Arretierelement 3 mit einem Gewinde 31 versehen, so dass die Montageschraube 32 festgezogen werden kann, sobald das Arretierelement 3 die Position B erreicht.

Das Arretierelement 3 ist vorzugsweise quaderförmig ausgestaltet, abgerundet und gegebenenfalls mit geneigten Flächen versehen, aufgrund derer das Arretierelement 3 beim Drehen innerhalb des Längsschlitzes 25 nach unten verschoben wird, die Schiene 1 dadurch festzieht und nahe dem Anschlag verklemmt.

Sofern das Arretierelement 3 ein Gewinde 31 aufweist, ist dieses oder die zugehörige Montageschraube 32 vorzugsweise mit einem viskosen Stoff oder Lack versehen, durch den das Arretierelement 3 beim Drehen der Montageschraube 32 von Position A nach Position B mitgeführt wird.

In Fig. 2 ist ferner eine Abdeckung 50 gezeigt, die auf die gegebenenfalls nicht bündig angeordneten Enden von Schiene 1 und Leiste 2 aufsetzbar ist. Die Abdeckung 50 ist vorzugsweise mit Stiften 51 versehen, die in den T-Profil-förmigen Längsschlitz 25 oder den Kanal 26 einfügbar sind.

Fig. 4 zeigt die fertig montierte Befestigungsvorrichtung mit im Schnitt dargestellter Schiene 1 und Leiste 2. Es ist ersichtlich, dass die Längen der Schenkel 21, 22 entsprechend den Abmessungen der Schiene 1 gewählt sind, so dass Abstufungen an den Übergängen zwischen Schiene 1 und Leiste 2 vermieden werden, wodurch, unter Vermeidung von Flanschen oder weiteren Befestigungselementen, optisch eine Einheit von Schiene 1 und Leiste 2 erzielt wird. Ebenso wurden die Abmessungen des Distanzelementes 40 dem zugeordneten Schenkel 21 der Leiste 2 angepasst.

## Patentansprüche

1. Befestigungsvorrichtung für eine Schiene (1), insbesondere eine Lauf- oder Führungsschiene, mit einem Montageelement, welches einerseits mit einer Wand (9) und andererseits mit der Schiene (1) verbindbar ist, **dadurch gekennzeichnet, dass** das Montageelement eine ein Winkelprofil aufweisende Leiste (2) mit zwei zur Aufnahme der Schiene (1) vorgesehenen Schenkeln (21; 22) ist, von denen der erste Schenkel (21) Öffnungen (23) zur Durchführung von mit der Wand (9) verbindbaren Befestigungsschrauben (24) und der zweite Schenkel (22) einen T-Profil-förmigen, gegen die Schiene (1) offenen Längsschlitz (25) aufweist, der zur Aufnahme und zum Halten eines Arretierelementes (3) dient, das fest oder mittels einem Gewinde mit einer zum Halten der Schiene (1) dienenden Montageschraube (32) verbunden ist.

2. Befestigungsvorrichtung nach Anspruch 1, **dadurch gekennzeichnet, dass** die Öffnungen (23) in einer zur Aufnahme des Kopfes der Befestigungsschraube (24) geeigneten Absenkung, vorzugsweise in einem längs dem ersten Schenkel (21) verlaufenden Kanal (26) angeordnet sind.

3. Befestigungsvorrichtung nach Anspruch 1 oder 2, **dadurch gekennzeichnet, dass** der erste Schenkel (21) auf der der Schiene (1) abgewandten Seite mit Längsnuten (27) versehen ist, die zur Aufnahme von Halterillen (41) eines Distanzelementes (40) dienen.

4. Befestigungsvorrichtung nach Anspruch 1, 2 oder 3, **dadurch gekennzeichnet, dass** die beiden Schenkel (21, 22) der vorzugsweise aus Leichtmetall gefertigten Leiste (2) zumindest annähernd senkrecht aufeinander stehen.

5. Befestigungsvorrichtung nach Anspruch 1, 2, 3 oder 4, **dadurch gekennzeichnet, dass** das Arretierelement (3) zumindest annähernd quaderförmig ausgestaltet ist, so dass es in Längsausrichtung in den T-Profil-förmigen Längsschlitz (25) eingeführt und darin vorzugsweise um 90° in eine Halteposition drehbar ist, wonach die Montageschrauben (32) angezogen werden können.

6. Befestigungsvorrichtung nach einem der Ansprüche 1-5, **dadurch gekennzeichnet, dass** das Gewinde (31) des Arretierelementes (3) oder der zugehörigen Montageschrauben (32) mit einem viskosen Stoff oder Lack versehen ist.

7. Befestigungsvorrichtung nach einem der Ansprüche 1-6, **dadurch gekennzeichnet, dass** die Längen der Schenkel (21, 22) entsprechend den Abmessungen der Schiene (1) gewählt sind, so dass Abstufungen an den Übergängen zwischen Schiene (1) und Leiste (2) vermieden werden.

8. Befestigungsvorrichtung nach einem der Ansprüche 1-7, **dadurch gekennzeichnet, dass** auf die gegebenenfalls nicht bündig angeordneten Enden der Schiene (1) und der Leiste (2) eine Abdeckung (50) aufsetzbar ist.

9. Befestigungsvorrichtung nach einem der Ansprüche 8, **dadurch gekennzeichnet, dass** die Abdeckung (50) mit Stiften (51) versehen ist, die in den T-Profilförmigen Längsschlitz (25) oder den Kanal (26) einfügbar sind.

10. Befestigungsvorrichtung nach einem der Ansprüche 1-9, **dadurch gekennzeichnet, dass** die Schiene (1) in die ein Winkelprofil aufweisende Leiste (2) eingesetzt und durch in den T-Profil-förmigen Längsschlitz (25) eingeführte Arretierelemente (3) sowie entsprechende Montageschrauben (32) gehalten ist.

## Claims

1. Fixing device for a rail (1), in particular a running or guide rail, having a mounting element which can be connected on one side to a wall (9) and on the other side to the rail (1), **characterized in that** the mounting element is a strip (2) which has an angular profile and has two limbs (21; 22) which are provided for holding the rail (1), the first limb (21) of which has openings (23) for the passing through of fixing screws (24) which can be connected to the wall (9), and the second limb (22) of which has a T-profile-shaped longitudinal slot (25) which is open towards the rail (1) and serves for holding and for retaining a locking element (3) which is connected fixedly or by means of a thread to a mounting screw (32) serving for retaining the rail (1).

2. Fixing device according to Claim 1, **characterized in that** the openings (23) are arranged in a depression suitable for holding the head of the fixing screw (24), preferably in a channel (26) running along the first limb (21).

3. Fixing device according to Claim 1 or 2, **characterized in that**, on the side facing away from the rail (1), the first limb (21) is provided with longitudinal grooves (27) which serve for holding retaining splines (41) of a spacer element (40).

4. Fixing device according to Claims 1, 2 or 3, **characterized in that** the two limbs (21, 22) of the strip (2), which is preferably manufactured from light metal, are at least approximately perpendicular with respect to each other.

5. Fixing device according to Claims 1, 2, 3 or 4, **characterized in that** the locking element (3) is at least approximately of cuboidal design, so that it is introduced in a longitudinal orientation into the T-profile-shaped longitudinal slot (25), and can be rotated therein, preferably through 90°, into a retaining position, after which the mounting screws (32) can be tightened.

6. Fixing device according to one of Claims 1-5, **characterized in that** the thread (31) of the locking element (3) or of the associated mounting screws (32) is provided with a viscous substance or paint.

7. Fixing device according to one of Claims 1-6, **characterized in that** the lengths of the limbs (21, 22) are selected in accordance with the dimensions of the rail (1), so that steps at the transitions between the rail (1) and strip (2) are avoided.

8. Fixing device according to one of Claims 1-7, **characterized in that** a covering (50) can be placed onto the ends of the rail (1) and of the strip (2), which ends are not arranged flush, if appropriate.

9. Fixing device according to one of Claims 1-8, **characterized in that** the covering (50) is provided with pins (51) which can be inserted into the T-profile-shaped longitudinal slot (25) or the channel (26).

10. Fixing device according to one of Claims 1-9, **characterized in that** the rail (1) is inserted into the strip (2) having an angular profile and is retained by locking elements (3) introduced into the T-profile-shaped longitudinal slot (25) and corresponding mounting screws (32).

## Revendications

1. Dispositif de fixation pour un rail (1), en particulier un rail de roulement ou de guidage avec un élément de montage lequel peut être relié d'une part avec une paroi (9) et d'autre part avec le rail (1) **caractérisé en ce que** l'élément de montage est un liteau (2) présentant un profilé angulaire avec deux branches (21; 22) prévues pour le logement du rail (1) dont une branche (21) présente des ouvertures (23) pour le passage de vis de fixation (24) reliables avec la paroi (9), et la seconde branche (22) présente une fente longitudinale (25) ouverte en direction du rail (1) qui sert au logement et au maintien d'un élément de blocage (3) qui est relié fixement ou au moyen d'un filet avec une vis de montage (32) servant au maintien du rail (1).

2. Dispositif de fixation selon la revendication 1, **caractérisé en ce que** les ouvertures (23) sont disposées dans un abaissement approprié au logement de la tête de la vis de fixation (24) de préférence dans un canal (26) s'étendant le long de la première branche (21).

3. Dispositif de fixation selon la revendication 1 ou 2, **caractérisé en ce que** la première branche (21) est munie sur la face détournée du rail (1) de rainures longitudinales (27) qui servent au logement de nervures de maintien (41) d'un élément d'écartement (40).

4. Dispositif de fixation selon la revendication 1, 2 ou 3, **caractérisé en ce que** les deux branches (21, 22) du liteau (2) fabriqué de préférence en métal léger sont au moins approximativement perpendiculaire entre elles.

5. Dispositif de fixation selon la revendication 1, 2, 3 ou 4, **caractérisé en ce que** l'élément de blocage (3) est réalisé au moins approximativement quadrilatère de sorte qu'il est inséré dans le sens longitudinal dans la fente longitudinale (25) en forme de profilé en T et peut y être tourné de 90° dans une position de maintien après quoi les vis de montage (32) peuvent être serrées.

6. Dispositif de fixation selon l'une des revendications 1 à 5, **caractérisé en ce que** le filet (31) de l'élément de blocage (3) ou des vis de montage respectives (32) est muni d'une substance visqueuse ou d'un vernis.

7. Dispositif de fixation selon l'une des revendications 1 à 6, **caractérisé en ce que** les longueurs des branches (21, 22) sont sélectionnées en fonction des dimensions du rail (1) de sorte que des étagements sont évités aux transitions entre le rail (1) et le liteau (2).

8. Dispositif de fixation selon l'une des revendications 1 à 7, **caractérisé en ce que** un recouvrement (50) peut être disposé sur les extrémités du rail (1), éventuellement disposées non affleurées, et du liteau (2).

9. Dispositif de fixation selon la revendication 8, **caractérisé en ce que** le recouvrement (50) est muni de chevilles (51) qui sont insérables dans la fente longitudinale (25) en forme de profilé en T ou dans le canal (26).

10. Dispositif de fixation selon l'une des revendications 1 à 9, **caractérisé en ce que** le rail (1) est inséré dans le liteau (2) présentant un profilé angulaire et est maintenu par des éléments de blocage (3) ainsi que des vis de montage (32) correspondantes insérés dans la fente longitudinale (25) en forme de profilé en T
